# FASCICULE DE BREVET EUROPEEN

(11) **EP 0 934 608 B1**
(45) Date de publication et mention de la délivrance du brevet: **18.12.2002**
(21) Numéro de dépôt: 97909407.5
(22) Date de dépôt: 14.10.1997
(51) Int. Cl.: H01Q 1/24, H01Q 21/28, H04B 1/38

(54) **SYSTEME ANTENNAIRE POUR POSTE RADIOTELEPHONE PORTATIF**
ANTENNENSYSTEM FÜR TRAGBARES FUNKGERÄT
ANTENNA SYSTEM FOR PORTABLE RADIOTELEPHONE STATION

(30) Priorité: 23.10.1996 FR 9612883
(43) Date de publication de la demande: 11.08.1999
(73) Titulaire: Thales, 75008 Paris (FR)
(72) Inventeur: ELKAEL, Maurice, Thomson-CSF SCPI, F-94117 Arcueil Cedex (FR); NGO BUI HUNG, Frédéric, Thomson-CSF SCPI, F-94117 Arcueil (FR)
(74) Mandataire: Lincot, Georges
(86) Numéro de dépôt international: FR9701834
(87) Numéro de publication internationale: WO98018175

(56) Documents cités:
- EP-A- 0 508 567
- EP-A- 0 590 955
- EP-A- 0 626 764
- EP-A- 0 644 607
- WO-A-97/26714

## Description

La présente invention concerne un système antennaire pour poste radiotéléphone portatif bi-mode permettant l'établissement de communications au travers de réseaux radio-cellulaires terrestres de type GSM ou sur le réseau téléphonique par l'intermédiaire d'un satellite ainsi que la réception par ces mêmes postes d'émissions de système de radionavigation par satellites du type connu sous l'abréviation anglo-saxonne GPS du vocable "Global positioning system".

Les solutions d'antenne pour équiper des postes radiotéléphone bi-mode du type précité sont nombreuses. Un de ces systèmes met en oeuvre par exemple une antenne hélice dont le mode de rayonnement radial est utilisé pour les liaisons terrestres et le mode axial est utilisé pour les liaisons avec le satellite. Mais ces solutions sont particulièrement encombrantes et peu ergonomiques et font courir un risque pour la santé des utilisateurs car l'antenne d'émission qui occupe une position très proche du crâne de l'utilisateur peut occasionner des lésions cérébrales. L'inadéquation des solutions actuelles aux problèmes posés par les radiotéléphones bi-mode trouve explication par le fait que les contraintes qui sont imposées au concepteur des postes radiotéléphone bi-mode tant au niveau fonctionnel qu'ergonomique sont souvent antinomiques. Elles se trouvent d'autant plus agravées lorsqu'il s'agit d'adjoindre en plus des fonctions bi-mode GSM et satellite celle de réception d'un système GPS.

Le mode GSM implique une antenne dont le diagramme de rayonnement est du type "dipôle vertical" (liaisons sol-sol omnidirectionnelle en polarisation verticale).

Les antennes utilisées dans les postes radiotéléphones GSM sont principalement des antennes de type monopole (brin métallique alimenté à sa base et dépassant de la face supérieure du postel. Certaines de ces antennes sont de type "raccourci", comme par exemple les antennes monopole de type "héli-whip", constitué d'un fil métallique formant une hélice, l'ensemble étant surmoulé dans un matériau thermoplastique. Ces antennes présentent l'avantage d'être plus courtes que les antennes fouet classiques de type "quart d'onde" ou "demi-onde", pour des performances radioélectriques voisines.

Il existe aussi des terminaux GSM dont l'antenne est invisible de l'extérieur. En fait, l'antenne est placée à l'intérieur du poste qui lui-même est doté d'une coque en matériau isolant transparent aux ondes radioélectriques. Ce type d'antennes est nommé "built-in antennas". L'intérêt d'une telle structure est essentiellement ergonomique puisqu'aucune antenne n'est visible" de l'opérateur, ce qui élimine le risque de cassure de l'antenne, par exemple lorsque le poste est placé dans une poche. L'ensemble de ces différentes antennes utilisées dans divers postes GSM du marché offrent des performances compatibles des exigences système des réseaux GSM existants, tant en ce qui concerne le gain que le diagramme de rayonnement. La marge présentée par le bilan de liaison entre ces terminaux et les BTS (station de base) est en effet suffisamment élevée pour permettre l'emploi d'antennes de performances modestes, au profit d'une meilleure erqonomie du terminal.

Le document EP-A-644607 décrit un système antennaire pour poste radiotéléphone qui comprend un élément rayonnant imprimé sur une plaque diélectrique articulée autour d'une charnière qui permette à la plaque d'être plaquée contre le dos du poste. Ce document mentionne la posibilité d'utiliser à la place d'une seule antenne pour réception et transmission deux antennes indépendantes.

Dans le cas d'un poste radiotéléphone bi-mode, la principale question qui se pose pour ce qui concerne l'antenne GSM est de savoir s'il est préférable d'utiliser une antenne dédiée au mode GSM ou une antenne présentant deux modes de fonctionnement, l'un pour le mode GSM, l'autre pour le mode SATELLITE. L'antenne SATELLITE doit permettre un fonctionnement radioélectrique très différent de celui de l'antenne GSM. En particulier, son diagramme de rayonnement doit favoriser les angles d'élévation élevés pour permettre les liaisons avec le satellite, alors que l'antenne GSM doit au contraire favoriser les angles d'élévation faible pour permettre des liaisons sol-sol.

En ce qui concerne la polarisation, l'antenne GSM doit fonctionner en polarisation linéaire, correspondant aux polarisations utilisées dans les stations de base. A contrario, l'antenne SATELLITE doit plutôt utiliser une polarisation circulaire, qui est plus favorable pour des liaisons de ce type. La réalisation d'une antenne bi-mode GSM/SATELLITE est cependant envisageable ; par exemple, une antenne de type à hélice précitée fonctionnant en mode radial à polarisation linéaire aux fréquences GSM et en mode axial à polarisation circulaire aux fréquences SATELLITE pourrait convenir. Ce type de structure présente malgré tout divers inconvénients, particulièrement en mode de fonctionnement SATELLITE où le couplage antenne/utilisateur est fort. C'est de plus une structure peu ergonomique du fait du diamètre nécessaire à l'hélice pour présenter des performances de rayonnement intéressantes en mode SATELLITE. Enfin, les performances requises en mode SATELLITE sont telles qu'il peut être. plus intéressant de lui affecter une antenne dédiée, plutôt qu'une antenne mixte dont les performances sont nécessairement plus modestes.

Dans ces conditions l'adjonction à un poste radiotéléphone bi-mode d'une fonction GPS supplémentaire ne peut qu'augmenter les difficultés de réalisation.

Le but de l'invention est de pallier les inconvénients précités.

A cet effet, l'invention a pour objet un système antennaire pour poste radiotéléphone portatif permettant l'établissement de communications terrestres et par satellite, tel que défini par la revendication 1.

L'invention a pour avantage qu'elle permet un fonctionnement en mode GSM du poste de radiotéléphone identique aux postes radiotéléphones dédiés classiquement au réseau GSM existant. Elle maximise les performances radioélectriques dans le mode de communication par satellite tout en étant satisfaisant au plan de l'ergonomie.

D'autre part, l'utilisation d'éléments rayonnants imprimés sur la plaque diélectrique rend compatible l'utilisation du poste radiotéléphone à la réception d'onde GPS du système anglo-saxon connu sous la désignation "Global positioning system" ce qui donne une fonctionnalité supplémentaire au poste radiotéléphone. L'écartement des éléments rayonnants entre eux et de la tête de l'utilisateur limite également au maximum des effets de couplage entre les antennes et l'utilisateur qui pourraient autrement entraîner des effets de déformation du diagramme de rayonnement des antennes et une absorption de puissance dans le cerveau.

D'autres caractéristiques et avantages de l'invention apparaîtront à l'aide de la description qui suit, faite en regard des dessins annexés qui représentent :
La figure 1 un poste radiotéléphone muni d'un système antennaire pour satellite selon l'invention.
La figure 2 un mode de réalisation d'un système antennaire selon l'invention permettant la réception simultanée ou non d'ondes provenant d'un satellite de télécommunication ou d'ondes provenant d'un réseau de satellites GPS.

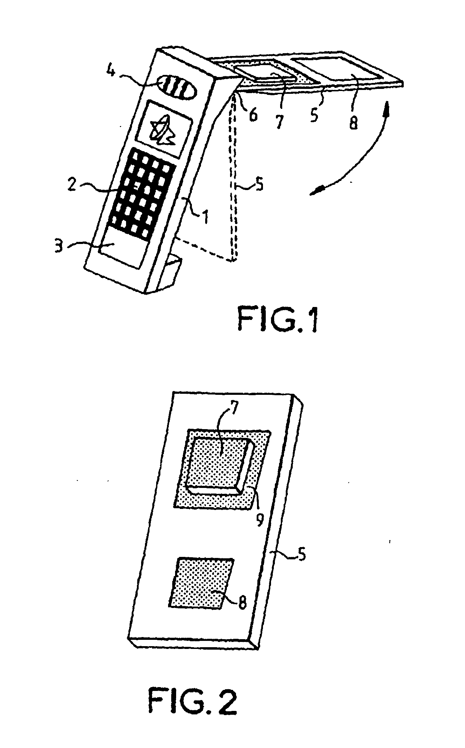

Le poste radiotéléphone qui est représenté à la figure 1 comprend de façon connue un boîtier 1 sur la face avant duquel repose un clavier de numérotation 2 interposé entre un microphone 3 et un écouteur 4. Recouvrant la face arrière du boîtier 1 est articulée une plaque diélectrique 5 autour d'une charnière 6, sur laquelle repose le système antennaire pour le mode satellite. Ce dernier se compose de la façon représentée aux figures 1 et 2 d'un premier élément rayonnant 8 et d'un deuxième élément rayonnant 7 imprimés au dessus de la plaque diélectrique 5. Le deuxième élément rayonnant 7 est utilisé pour la réception d'onde radioélectrique provenant d'un satellite de télécommunication et le premier élément rayonnant 8 est utilisé pour l'émission d'onde électromagnétique vers un satellite de télécommunication. Un troisième élément rayonnant 9 est interposé entre la plaque diélectrique et le deuxième élément rayonnant pour permettre la réception d'émission émises par des satellites du système de navigation par satellite connu sous l'abréviation anglo-saxonne GPS de "Global positioning system". A titre d'exemple, l'élément rayonnant 8 peut être réalisé suivant la technique "patch" décrite dans le libre intitulé "Handbook of Microstrip Antennas" chapitre 4 circular polarisation and bandwidth pages 219 à 274 et les éléments rayonnants 7 et 9 peuvent être réalisés suivant la technique exposée dans ce même livre chapitre 6 intitulé "Multilayer and parasitic configurations, pages 312 à 351.

Cette technologie d'antenne imprimée sur substrat utilise des éléments de surface conducteurs résonnants comme éléments rayonnants. Outre le fait d'être ergonomique puisque les éléments rayonnants obtenus sont plats et de faible épaisseur, elle permet en outre un fonctionnement en polarisation linéaire ou en polarisation circulaire suivant la forme des éléments rayonnants et leur mode d'excitation. La bande passante des éléments rayonnants est cependant réduite du fait de l'utilisation d'éléments résonnants, mais cette caractéristique convient bien pour des liaisons satellites à 2,54 GHz de la bande S. Les éléments rayonnants sont configurés pour être directifs avec un angle d'ouverture à mi-puissance de l'ordre de 120 degrés. L'axe principal de rayonnement est dans ce cas l'axe normal au plan formé par la plaque diélectrique 5. Le fait que la plaque diélectrique 5 soit articulée autour de la charnière 6 permet d'orienter le système antennaire vers le satellite lorsque l'écouteur 4 du poste est plaqué sur l'oreille de l'utilisateur à la manière d'un combiné téléphonique classique. L'orientation en azimut est uniquement liée à la position de l'utilisateur qui peut, pour optimiser la liaison, se déplacer dans la direction qui convient pour pointer approximativement le système antennaire dans la direction du satellite.

Naturellement la réception par les éléments rayonnants 7 et 9 d'émissions de satellite de radiocommunication et GPS n'est réalisable que si les éléments rayonnants 7 et 9 ont des bandes de résonance distinctes, l'une correspondant aux fréquences des satellites de télécommunication l'autre aux fréquences GPS (code C/A). L'utilisation de deux éléments d'antennes de réception 7 et 9 superposés permet de coupler les deux éléments rayonnants l'un à l'autre et d'obtenir ainsi ces deux résonances.

L'intérêt d'une telle structure est d'éliminer du poste une antenne spécifique à un mode de fonctionnement GPS dont l'implantation sur le poste serait délicate et contraignante d'un point de vue ergonomique.

Pour le fonctionnement en mode GSM terrestre, la plaque diélectrique (5) est rabattue sur le dos du poste (1). Une antenne spécifique optimisée pour les fréquences GSM, et correspondant aux modèles existants sur le marché peut alors être utilisé. Cette antenne n'est donc pas représentée. Cependant pour des raisons d'ergonomie, celle-ci pourra être constituée par un élément bipolaire ou non intégré dans le boîtier 1.

## Revendications

1. Système antennaire adapté à un poste de radiotéléphone portatif (1) permettant l'établissement de communications terrestres et par satellite, **caractérisé en ce que** pour établir des communications par satellite celui-ci comprend un premier (8) et un deuxième (7) éléments rayonnants imprimés sur une plaque diélectrique (5) de faible épaisseur, un premier élément rayonnant (8) étant destiné à l'émission du poste vers le satellite, et le deuxième élément rayonnant (7) étant destiné à la réception des signaux en provenance du satellite, **en ce que** la plaque diélectrique (5) supportant les éléments rayonnants possède une longueur et une largeur similaire à celle du poste radiotéléphone et est articulée autour d'une charnière (6) permettant à la plaque diélectrique (5) d'être plaquée contre le dos du poste radiotéléphone (1) quand ce dernier n'est pas utilisé en mode de transmission satellite ou de se déployer par rotation autour de la charnière quand le poste de radiotéléphone (1) est utilisé pour une transmission par satellite, et **en ce que** le deuxième élément rayonnant (7) est interposé sur la plaque diélectrique (5) entre la charnière et le premier élément rayonnant pour qu'en position déployée de la plaque diélectrique, l'énergie rayonnée par le premier élément rayonnant ne présente aucun risque de lésion du cerveau de l'utilisateur du poste radio portatif, **en ce qu'**il comprend un troisième élément rayonnant (9) interposé entre le deuxième élément rayonnant (7) et la plaque diélectrique (5) pour la réception d'ondes émises par des satellites du système de radionavigation GPS, et **en ce que** pour établir des communications terrestres il comprend une antenne intégrée dans le boîtier du poste.

2. Système antennaire selon la revendication 1. **caractérisé en ce que** les premier (8), deuxième (7) et troisième (9) éléments rayonnants sont composés d'éléments de surface conducteurs résonnants imprimés sur un substrat.

3. Système selon la revendication 2, **caractérisé en ce que** les deuxième et troisième éléments rayonnants (7, 9) sont couplés l'un à l'autre, et résonnent sur des fréquences distinctes correspondant respectivement aux fréquences des satellites de télécommunication pour le deuxième (7) et aux fréquences du système GPS (code C/A) pour le troisième (9).

## Claims

1. Antenna system suitable for a portable radiotelephone set (1) allowing the setting up of terrestrial and satellite telecommunications, **characterized in that** in order to set up communications by satellite the latter comprises a first (8) and a second (7) radiating element printed on a dielectric plate (5) of small thickness, a first radiating element (8) being intended for transmission from the set to the satellite, and the second radiating element (7) being intended for the reception of the signals originating from the satellite, **in that** the dielectric plate (5) supporting the radiating elements possesses a length and a width which is similar to that of the radio telephone set and is articulated about a hinge (6) allowing the dielectric plate (5) to be placed flat against the back of the radiotelephone set (1) when the latter is not used in satellite transmission mode or to unfurl by rotation about the hinge when the radiotelephone set (1) is used for satellite transmission, and **in that** the second radiating element(7) is interposed on the dielectric plate (5) between the hinge and the first radiating element so that in the unfurled position of the dielectric plate, the energy radiated by the first radiating element presents no risk of lesion of the brain of the user of the portable radio set, **in that** it comprises a third radiating element (9) interposed between the second radiating element (7) and the dielectric plate (5) for the reception of waves transmitted by satellites of the GPS radionavigation system, and **in that** in order to set up terrestrial communications it comprises an integrated antenna built into the housing of the set.

2. Antenna system according to Claim 1, **characterized in that** the first (8), second (7) and third (9) radiating elements are composed of resonant conducting surface elements printed on a substrate.

3. System according to Claim 2, **characterized in that** the second and third radiating elements (7, 9) are coupled to one another, and resonate on distinct frequencies corresponding respectively to the frequencies of the telecommunication satellites for the second (7) and to the frequencies of the GPS system (C/A code) for the third (9).

## Patentansprüche

1. Antennensystem, das für eine tragbare Funktelephon-Station (1) geeignet ist und den Aufbau einer terrestrischen und einer satellitengestützten Kommunikation ermöglicht, **dadurch gekennzeichnet, daß** es für den Aufbau einer satellitengestützten Kommunikation ein erstes (8) und ein zweites (7) Strahlerelement umfaßt, die auf eine dielektrische Platte (5) mit geringer Dicke gedruckt sind, wobei ein erstes Strahlerelement (8) dazu bestimmt ist, von der Station zum Satelliten zu senden, und das zweite Strahlerelement (7) dazu bestimmt ist, Signale vom Satelliten zu empfangen, daß die dielektrische Platte (5), die die Strahlerelemente trägt, eine Länge und eine Breite besitzt, die ähnlich jenen der Funktelephon-Station sind, und um ein Scharnier (6) angelenkt ist, wodurch die dielektrische Platte (5) gegen die Rückseite der Funktelephon-Station (1) gedrückt werden kann, wenn diese letztere nicht in der Satellitenübertragungs-Betriebsart verwendet wird, oder durch Drehung um das Scharnier ausgeklappt werden kann, wenn die Funktelephon-Station (1) für eine Satellitenübertragung verwendet wird, und daß das zweite Strahlerelement (7) auf der dielektrischen Platte (5) zwischen dem Scharnier und dem ersten Strahlerelement angeordnet ist, damit in der ausgeklappten Stellung der dielektrischen Platte nicht die Gefahr besteht, daß die vom ersten Strahlerelement abgestrahlte Energie das Gehirn des Anwenders der tragbaren Funkstation schädigt, daß es ein drittes Strahlerelement (9) umfaßt, das zwischen dem zweiten Strahlerelement (7) und der dielektrischen Platte (5) angeordnet ist, um Wellen zu empfangen, die von Funknavigationssatelliten (GPS-Satelliten) ausgesendet werden, und daß es für den Aufbau einer terrestrischen Kommunikation eine in das Gehäuse der Station integrierte Antenne umfaßt.

2. Antennensystem nach Anspruch 1, **dadurch gekennzeichnet, daß** das erste (8), das zweite (7) und das dritte (9) Strahlerelement aus Resonanz-Oberflächenleiterelementen, die auf ein Substrat gedruckt sind, aufgebaut sind.

3. System nach Anspruch 2, **dadurch gekennzeichnet, daß** das zweite und das dritte Strahlerelement (7, 9) miteinander gekoppelt sind und bei unterschiedlichen Frequenzen, die den Frequenzen von Telekommunikationssatelliten für das zweite (7) bzw. den Frequenzen des GPS-Systems (Code C/A) für das dritte (9) entsprechen, in Resonanz treten.
